# EUROPEAN PATENT APPLICATION

(11) **EP 4 361 294 A1**
(43) Date of publication of application: **01.05.2024**
(21) Application number: 23202567.6
(22) Date of filing: 10.10.2023
(51) Int. Cl.: C21D 1/10, C21D 1/25, C21D 6/00, C21D 8/00, C21D 9/40, C22C 38/00, C21D 1/60

(54) **HEAT TREATMENT METHOD OF BEARING RING**

(30) Priority: 31.10.2022 CN 202211347506
(71) Applicant: Aktiebolaget SKF, 415 50 Göteborg (SE)
(72) Inventor: Song, Yunfeng, Shanghai, 201814 (CN); Pan, Yunfei, TaiCang, 215488 (CN); Qian, Weihua, Shanghai, 200000 (CN)
(74) Representative: Kuhstrebe, Jochen

(57) **Abstract**

The invention discloses a heat treatment method for a bearing ring, the method comprising the following steps: the first step: performing induction heating and liquid spraying on the bearing ring, so that a radially outer portion and/or a radially inner portion of the bearing ring is hardened, and a radially middle portion is hardened; the second step: performing induction heating on a radially side surface which one of the two hardened portions or the hardened portion in the first step is adjacent to, so that the temperature at the corresponding surface reaches 820°C-950°C, while performing liquid spraying on the other radially side surface opposite to said side surface, so that the temperature of the entirety of the other radially side surface does not exceed 150°C, and, for the region subjected to the induction heating treatment, performing liquid spraying treatment after the induction heating treatment, so that the bearing ring forms a hardened radially outer portion, a hardened radially inner portion, and a radially middle portion with a reduced hardness; the third step: performing low-temperature tempering on the bearing ring. The heat treatment method of the present invention can increase fatigue life, reduce manufacturing energy consumption, and reduce manufacturing cost.

## Description

### TECHNICAL FIELD

The invention belongs to the field of processing technology of metal parts. In particular, the invention involves a heat treatment method of a bearing ring.

### BACKGROUND

In the manufacturing process of a bearing ring, the bearing ring is usually subjected to heat treatment, so that it can obtain higher surface hardness and wear resistance. Meanwhile, it is also hoped that the material of the bearing ring will have high toughness and high fatigue life. To this end, one method is to use low-carbon alloy steel to manufacture the bearing ring, and carburize the bearing ring, so that the steel has a hardened layer from the surface to a proper depth and has lower hardness and higher toughness at the deeper core.

However, the process and equipment required for carburizing treatment are complicated and the reaction time is long, which increases the cost of heat treatment from various aspects. Moreover, the bearing ring that has only been carburized still needs different subsequent heat treatments according to the condition of the material. If a subsequent heat treatment fails to properly eliminate the defects caused by the carburizing treatment, the bearing ring is still prone to failure when bearing an impact load.

Therefore, there is a need for an improved heat treatment method of the bearing ring, which can save the cost and also make the bearing ring have improved material properties.

### SUMMARY

In view of the above problems, according to a first aspect of the present invention, a method for heat treatment of a bearing ring is proposed, which comprises the following steps:
the first step: performing an induction heating treatment and a liquid spraying treatment on the bearing ring, so that a first radially outer portion and/or a first radially inner portion of the bearing ring are hardened, and a first radially middle portion located between the first radially outer portion and the first radially inner portion is hardened;
the second step: a side surface, to which one of the two portions or the one portion of the first radially outer portion and the first radially inner portion that is hardened in the first step is adjacent, being defined as a first radial surface, and a side surface of the bearing ring opposite to the first radial surface being defined as a second radial surface, performing an induction heating treatment on at least a part of the second radial surface, the temperature of the region of the second radial surface subjected to the induction heating treatment reaching 820-950°C, and at the same time, performing a liquid spraying treatment in at least a part of the first radial surface so that the temperature of the whole surface of the first radial surface does not exceed 150°C, and performing a liquid spraying treatment on the region of the second radial surface subjected to the induction heating treatment after the induction heating treatment, so that the bearing ring forms a hardened second radially outer portion, a hardened second radially inner portion, and a second radially middle portion located between the second radially outer portion and the second radially inner portion and having a hardness lower than the second radially outer portion and the second radially inner portion;
the third step: performing a low-temperature tempering treatment on the bearing ring.

The method according to the first aspect of the present invention has the following technical effects. With the present method, hardness up to 55-65 HRC and improved wear resistance can be obtained in the radially outer region and the radially inner region of the bearing ring, and hardness of 25-55 HRC and improved toughness can be obtained in the radially middle region without using the carburizing process. The method according to the first aspect of the invention increases the fatigue life of a bearing ring by at least 15% compared with the carburizing process. In addition, in the carburizing process, if the heat treatment is performed at 940°C and a carburizing depth of 2 mm is desired, the carburizing process needs to be performed for at least 16 hours, while at a similar temperature, the heat treatment adopting the present method only takes about 15 minutes. Therefore, adopting the present method saves the energy consumption by more than 60% and increases the manufacturing efficiency by at least 50%.

The method of heat treatment according to the present invention may have one or more of the following features.

According to an embodiment, preferably, the induction heating treatment in the first step is a full-cover induction heating treatment or a scanning induction heating treatment, and the induction heating treatment in the second step is a full-cover induction heating treatment or a scanning induction heating treatment. The full-cover induction heating treatment can further improve the manufacturing efficiency by performing the induction heating treatment on the entire bearing ring at the same time, while the scanning induction heating treatment can further reduce the manufacturing cost due to the simpler equipment required.

According to an embodiment, preferably, the induction heating treatment in the second step is a full-cover induction heating treatment, and in the second step, the induction heating treatment is also performed on both ends of the bearing ring, followed by a liquid spraying treatment on the both ends of the bearing ring. The method according to this embodiment can also perform hardening treatment on both end portions of the bearing ring, thereby obtaining axial end portions with hardness greater than 50 HRC, and improving the wear resistance of both ends of the bearing ring and the fatigue life of the overall bearing ring.

According to an embodiment, preferably, in the second step, the second radial surface is subjected to a full-cover induction heating treatment and a subsequent full-cover liquid spraying treatment, and the first radial surface is subjected to a full-cover liquid spraying treatment.

According to an embodiment, preferably, in the second step, the second radial surface is subjected to a scanning induction heating treatment and a subsequent scanning liquid spraying treatment, and the first radial surface is subjected to a scanning liquid spraying treatment.

According to an embodiment, preferably, in the second step, the second radial surface is subjected to a scanning induction heating treatment and a subsequent scanning liquid spraying treatment, and the first radial surface is subjected to a full-cover liquid spraying treatment.

According to an embodiment, preferably, the temperature for the low-temperature tempering treatment of the third step is 150°C-250°C.

According to an embodiment, preferably, for the low-temperature tempering of the third step, a tempering furnace is used to hold the temperature of the bearing ring warm for at least 2 hours, or induction tempering is used to keep the bearing ring warm for 1-20 minutes.

According to an embodiment, preferably, for the liquid spraying treatment in the first step and the second step, water or a water-based quenching medium is used as the sprayed liquid.

According to an embodiment, preferably, in the second step, the liquid spraying treatment on the first radial surface is finished before the liquid spraying treatment on the second radial surface.

According to an embodiment, preferably, the material of the bearing ring is selected from medium or high carbon steel, and more preferably, it is selected from GCr15, 100Cr6, 52100, 100C6, SUJ2, 42CrMo, 50CrMo, 55MnB, 70Mn, T8, T10, Cr2, T8Mn, 85, 60Mn, 65Mm, 50B, 45MnB, 50Cr, GCr9, GCr9SiMn, GCr15SiMn, 9Cr18, 9Cr18Mo. Among them, 100Cr6 is a steel grade of German standard, 52100 is a steel grade of American standard, 100C6 is a steel grade of French standard, SUJ2 is a steel grade of Japanese standard, and the rest of the steel grades are of Chinese standard.

According to a second aspect of the present invention, a method for heat treatment of a bearing ring is proposed, the method comprising the following steps:
the first step: performing an induction heating treatment and a liquid spraying treatment on the bearing ring, so that a first radially outer portion and/or a first radially inner portion of the bearing ring are hardened, and a first radially middle portion located between the first radially outer portion and the first radially inner portion is hardened;
the second step: a side surface, to which one of the two portions or the one portion of the first radially outer portion and the first radially inner portion that is hardened in the first step is adjacent, being defined as a first radial surface, and a side surface of the bearing ring opposite to the first radial surface being defined as a second radial surface, performing an induction heating treatment on at least a part of the second radial surface, the temperature of the region of the second radial surface subjected to the induction heating treatment reaching 820-950°C, and at the same time, performing a liquid spraying treatment in at least a part of the first radial surface so that the temperature of the whole surface of the first radial surface does not exceed 150°C, and performing a liquid spraying treatment on the region of the second radial surface subjected to the induction heating treatment after the induction heating treatment, so that the bearing ring forms a hardened second radially outer portion, a hardened second radially inner portion, and a second radially middle portion located between the second radially outer portion and the second radially inner portion and having a hardness lower than the second radially outer portion and the second radially inner portion.

The method according to the second aspect of the present invention has the following technical effects. With the present method, hardness up to 55-65 HRC and improved wear resistance can be obtained in the radially outer region and the radially inner region of the bearing ring, and hardness of 25-55 HRC and improved toughness can be obtained in the radially middle region without using the carburizing process. Similarly, the method according to the second aspect of the invention increases the fatigue life of a bearing ring by at least 15% compared with the carburizing process. In addition, in the carburizing process, if the heat treatment is performed at 940°C and a carburizing depth of 2 mm is desired, the carburizing process needs to be performed for at least 16 hours, while at a similar temperature, the heat treatment adopting the present method only takes about 15 minutes. Therefore, adopting the present method saves the energy consumption by more than 60% and increases the manufacturing efficiency by at least 50%. Also, by using the method according to the second aspect of the present invention, the residual compressive stress on the radially inner surface and the radially outer surface of the bearing ring, thereby improving the fatigue strength of the bearing ring.

According to a third aspect of the present invention, a bearing ring is proposed, the bearing ring is defined from outside to inside in the radial direction with: a radially outer portion with a thickness of 10%-40% of the thickness of the bearing ring, a radially middle portion with a thickness of 20%-80% of the thickness of the bearing ring, and a radially inner portion with a thickness of 10%-40% of the thickness of the bearing ring, wherein the hardness of the radially outer portion is 55-65 HRC, the hardness of the radially middle portion is 25-55 HRC, and the hardness of the radially inner portion is 55-65 HRC.

According to an embodiment of the third aspect of the present invention, preferably, the hardness of the radially outer portion is 58-65 HRC, the hardness of the radially middle portion is 35-55 HRC, and the hardness of the radially inner portion is 58-65 HRC.

According to an embodiment of the third aspect of the present invention, preferably, the bearing ring is further defined with axial end portions located at both ends of the bearing ring, wherein the hardness of the axial end portions is greater than 50 HRC.

### BRIEF DESCRIPTION OF THE DRAWINGS

To illustrate the technical solutions of the embodiments of the present invention more clearly, the accompanying drawings of the embodiments of the present invention will be briefly introduced hereinafter. The accompanying drawings are only used to illustrate some embodiments of the present invention, but not to limit all the embodiments of the present invention thereto.
Fig. 1A is a schematic diagram of the first step of the method according to the first embodiment of the present invention, and Fig. 1B is a schematic diagram of the second step of the method according to the first embodiment of the present invention;
Fig. 2A is a schematic diagram of the first step of the method according to the second embodiment of the present invention, and Fig. 2B is a schematic diagram of the second step of the method according to the second embodiment of the present invention;
Fig. 3A is a schematic diagram of the first step of the method according to the third embodiment of the present invention, and Fig. 3B is a schematic diagram of the second step of the method according to the third embodiment of the present invention;
Fig. 4A is a schematic diagram of the first step of the method according to the fourth embodiment of the present invention, and Fig. 4B is a schematic diagram of the second step of the method according to the fourth embodiment of the present invention;
Fig. 5A is a schematic diagram of the first step of the method according to the fifth embodiment of the present invention, and Fig. 5B is a schematic diagram of the second step of the method according to the fifth embodiment of the present invention;
Fig. 6A is a schematic diagram of the first step of the method according to the sixth embodiment of the present invention, and Fig. 6B is a schematic diagram of the second step of the method according to the sixth embodiment of the present invention;
Fig. 7 is a schematic diagram of the partition of material hardness on a bearing ring heat-treated by a method according to an embodiment of the present invention;
Fig. 8 is a cross-sectional depth-hardness graph of a bearing ring heat-treated by a method according to an embodiment of the present invention;
Fig. 9A is a schematic diagram of the first step of the method according to the seventh embodiment of the present invention, and Fig. 9B is a schematic diagram of the second step of the method according to the seventh embodiment of the present invention;
Fig. 10A is a schematic diagram of the first step of the method according to the eighth embodiment of the present invention, and Fig. 10B is a schematic diagram of the second step of the method according to the eighth embodiment of the present invention;
Fig. 11 is a schematic diagram of the partition of material hardness on a bearing ring heat-treated by a method according to an embodiment of the present invention.

List of reference numerals
- 1: full-cover induction heating and liquid spraying treatment
- 2: full-cover liquid spraying treatment
- 3: scanning induction heating and liquid spraying treatment
- 4: scanning liquid spraying treatment
- 5: full-cover induction heating and liquid spraying treatment covering the axial ends of the bearing ring

- 11: second radially outer portion
- 12: second radially middle portion
- 13: second radially inner portion
- 24: axial end portion

- L: axial length of the bearing ring
- D: thickness of the bearing ring
- OD: radially outer surface of the bearing ring
- ID: radially inner surface of the bearing ring
- ES: axial end surface of the bearing ring

### DETAILED DESCRIPTION

To make the purpose, technical solution and advantages of the technical solutions of the present invention clearer, the technical solutions of the embodiments of the present invention will be clearly and completely described below with reference to the drawings of specific embodiments of the present invention. In the drawings, the same reference numerals represent the same parts. It should be noted that the described embodiments are part of the embodiments of the present invention, but not all of them. Based on the described embodiments of the present invention, all other embodiments obtained by those of skills in the art without creative labor are within the protection scope of the present invention.

Unless otherwise defined, the technical terms or scientific terms used here shall have their ordinary meanings as understood by those with ordinary skills in the field to which this invention belongs. The words "first", "second" and the like used in the description and claims of the patent application of the present invention do not indicate any order, quantity or importance, but are only used to distinguish different components. Similarly, words "one" or "an" and the like do not necessarily mean quantity limitation. Words "comprising" or "including" and the like mean that the elements or objects appearing before the word cover the listed elements or objects appearing after the word and their equivalents, without excluding other elements or objects. Phrases like "connected to" or "connected with" are not limited to physical or mechanical connections, but can include electrical connections, whether direct or indirect. "Up", "down", "left" and "right" are only used to express relative positional relationship. When the absolute position of the described object changes, the relative positional relationship may also change accordingly.

The present invention will be described in detail below by describing example embodiments.

### < First embodiment >

The method according to the first embodiment of the present invention comprises three steps.

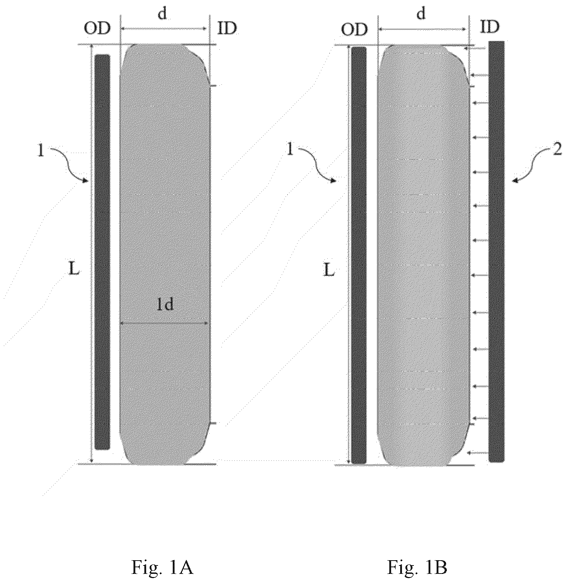

Figs. 1A and 1B show the first step and the second step of the method according to the first embodiment of the present invention, respectively, wherein a cross-sectional view of the bearing ring in a plane where the axis thereof is located is used for illustration. As shown in Figs. 1A and 1B, the exemplary bearing ring has an axial length L and a thickness d, and has a radially outer surface OD and a radially inner surface ID.

In the first step, as shown in Fig. 1A, an induction heating and liquid spraying treatment is performed on the entire radially outer surface OD of the bearing ring, that is, a full-cover induction heating and liquid spraying treatment 1, so that the material over the entire thickness d of the bearing ring is hardened. In the first step, the entire radially outer surface OD of the bearing ring is subjected to an induction heating treatment, so that the temperature at the entire radially outer surface OD reaches 820°C-950°C, and then the entire radially outer surface OD is subjected to a liquid spraying treatment.

Thus, in the first step, the bearing ring is subjected to an induction heating quenching over the entire thickness d, thereby being hardened. The bearing ring is thus defined with three portions along its radial thickness d: a radially outer portion (the first radially outer portion), a radially inner portion (the first radially inner portion) and a radially middle portion (the first radially middle portion) located between the first radially outer portion and the first radially inner portion, all three portions of the bearing ring being hardened in the first step.

In an example according to this embodiment, the axial length L of the bearing ring is 87 mm, the radial thickness d is 18 mm, and the material of the bearing ring is GCr15. For this example, the induction heating frequency used in the first step is 1-3 kHz, which would result in hardening of the bearing ring over the entire thickness d, and would also result in a more uniform heating over the entire thickness d of the bearing ring. However, in other embodiments, the frequency of induction heating may be higher than 3 kHz but less than 10 kHz, as long as the corresponding induction heating and subsequent liquid spraying hardens the bearing ring over its entire thickness d.

For the first step of the present embodiment and the second step to be described in detail below, the liquid used in the liquid spraying treatment is water. In the first embodiment and other embodiments according to the present invention, water or other water-based quenching medium can also be used in the liquid spraying treatment. However, other quenching media, such as oil, can also be used as long as the desired material property of the corresponding step can be achieved.

In the second step, as shown in Fig. 1B, the entire radially outer surface OD of the bearing ring is subjected to a full-cover induction heating and liquid spraying treatment 1, while the entire radially inner surface ID of the bearing ring is subjected to a full-cover liquid spraying treatment 2. That is, in a first stage of the second step, an induction heating treatment is performed at the radially outer surface OD, wherein the temperature of the entire radially outer surface OD reaches 820°C-950°C, and at the same time, a liquid spraying treatment is performed at the radially inner surface ID, wherein the temperature of the entire radially inner surface ID is kept below 150°C. Then, in a second stage of the second step, the induction heating treatment at the radially outer surface OD is stopped, and a liquid spraying treatment is also started at the radially outer surface OD, while the liquid spraying treatment at the radially inner surface ID is continued for a period of time. According to an example of this embodiment, the frequency of the induction heating treatment used in the second step is 8-10 kHz, and the liquid used in the liquid spraying treatment is water. In the second step, regions of different depths in the radial direction are subjected to different heat treatments and obtain corresponding changes in the material property, so that three portions of the bearing ring are defined from outside to inside in the radial direction: a second radially outer portion, a second radially middle portion and a second radially inner portion. The second radially outer portion of the bearing ring that is close to the radially outer surface OD (i.e., a portion that is roughly the aforementioned first radially outer portion) is subjected to an induction heating treatment and a liquid spraying treatment for a second time, that is, to undergo an induction heating quenching process for a second time, thus being hardened again; the second radially inner portion of the bearing ring that is close to the radially inner surface ID (i.e., a portion that is roughly the aforementioned first radially inner portion) is continuously sprayed with water after the first step, so that the temperature at the radially inner surface ID does not exceed 150°C, so the material property of the second radially inner portion basically does not change, thereby maintaining the high hardness obtained in the first step; The second radially middle portion between the second radially outer portion and the second radially inner portion (i.e., a portion that is roughly the aforementioned first radially middle portion) also undergoes induction heating in the first stage of the second step, but since it is further away from the radially outer surface OD, the degree of induction heating for it is smaller than that for the second radially outer portion, and at the same time, it is subjected to a cooling effect from the liquid spraying at the radially inner surface ID, so that in the first stage of the second step, the second radially middle portion is heated to a temperature that is lower than the temperature reached in the second radially outer portion at the same time. Then, in the second stage of the second step, the second radially middle portion is cooled down with the second radially outer portion and the second radially inner portion. Therefore, the second radially middle portion is subjected to a high-temperature or medium-temperature tempering throughout the second step, causing its hardness to drop below that obtained after the first step, but its toughness is improved.

According to an example of the first embodiment, in the second stage of the second step, the liquid spraying process at the radially inner surface ID may end before the liquid spraying at the radially outer surface OD, as long as the temperature at the radially inner surface ID does not exceed 150°C over the entire second stage, thus allowing finer control of the material properties in the vicinity of the radially inner surface ID.

In an example according to this first embodiment, by means of the second step, a hardening depth of about 0.1d-0.4d from the radially outer surface OD and radially inwards is obtained, while the hardness at the radially inner surface ID is maintained. In addition, the second radially middle portion of the bearing ring formed in the second step achieves a lower hardness than the second radially outer portion and the second radially inner portion.

According to an embodiment of the present invention, the material of the bearing ring is selected from medium carbon steel or high carbon steel. According to an example of the embodiments of the present invention, the material of the bearing ring is selected from GCr15, 100Cr6, 52100, 100C6, SUJ2, 42CrMo, 50CrMo, 55MnB, 70Mn, T8, T10, Cr2, T8Mn, 85, 60Mn, 65Mn, 50B, 45MnB, 50Cr, GCr9, GCr9SiMn, GCr15SiMn, 9Cr18, 9Cr18Mo.

In the third step, the bearing ring is subjected to a low-temperature tempering treatment. By means of the third step, the residual stress in the bearing ring is reduced, the overall properties of the material are improved, and the high hardness and high wear resistance of the radially inner surface and the radially outer surface of the bearing ring after the second step are ensured. In an example according to this embodiment, the low-temperature tempering treatment uses a temperature of 150°C-250°C. In an example according to this embodiment, the bearing ring is tempered using induction tempering or a tempering furnace or the like, wherein the bearing ring is kept warm for at least 2 hours using the tempering furnace, or the bearing ring is kept warm for 1-20 minutes using induction tempering.

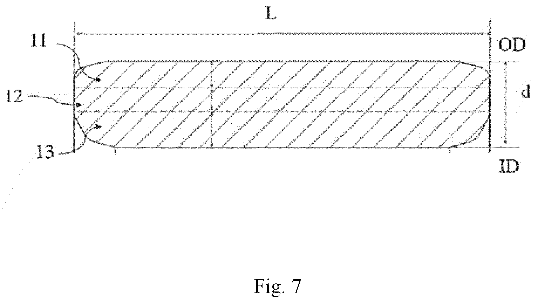

FIG. 7 shows a schematic diagram of the material hardness of the bearing ring obtained by the method according to the first embodiment of the present invention, wherein a cross-sectional view of the bearing ring in a plane where the axis thereof is located is used for illustration. In a case where the material of the bearing ring is selected from medium carbon steel or high carbon steel, after performing the method according to the first embodiment of the present invention, the second radially outer portion 11 having a hardness of 55 - 65HRC and a thickness of 0.1d - 0.4d and the second radially inner portion 13 having a hardness of 55 - 65 HRC and a thickness of 0.1d - 0.4d will be formed in the bearing ring, while the middle portion in the thickness direction of the bearing ring will form the second radially middle portion 12. Therefore, the second radially outer portion 11 and the second radially inner portion 13 are hardened regions, and the second radially middle portion 12 is a toughened region.

In an embodiment according to the present invention, by adjusting the specific parameters of the induction heating and the liquid spraying, a second radially outer portion 11 with a thickness of 0.3d - 0.4d and a second radially inner portion 13 with a thickness of 0.2d - 0.3d can be obtained. In another embodiment according to the present invention, by adjusting the specific parameters of the induction heating and the liquid spraying, a second radially outer portion 11 with a hardness of 58-65 HRC, a second radially inner portion 13 with a hardness of 58-65 HRC, and a second radially middle portion 12 with a hardness of 35-55 HRC can be obtained.

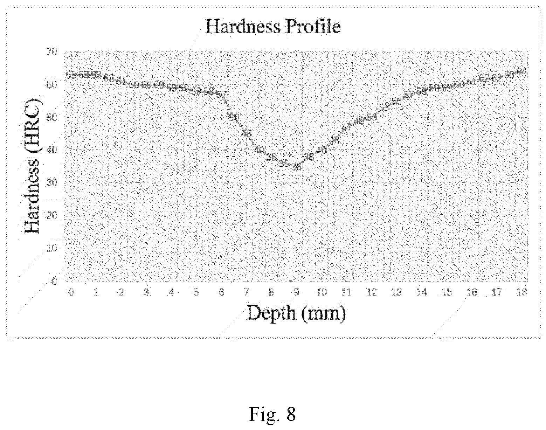

Fig. 8 shows a measured depth-hardness curve of a material section in a bearing ring obtained by the method according to the first embodiment of the present invention, wherein the depth is measured from the radially outer surface OD and ends at the radially inner surface ID. As shown in Fig. 8, in a radial depth range of 0-0.3d, that is, in the second radially outer portion 11, the material hardness is approximately 58-65 HRC, in a radial depth range of 0.3d-0.8d, that is, in the second radially middle portion 12, the material hardness is approximately 35-55 HRC, and in a radial depth range of 0.8d-1d, that is, in the second radially inner portion 13, the material hardness is approximately 58-65 HRC.

Compared with the carburizing process, the method according to the first embodiment of the invention makes the compressive stress in the bearing ring better, thus prolonging the fatigue life of the bearing ring by at least 15%. In addition, in the carburizing process, if the heat treatment is performed at 940°C and a carburizing depth of 2 mm is desired, the carburizing process needs to be performed for at least 16 hours, while at a similar temperature, the heat treatment adopting the present method only takes about 15 minutes. Therefore, the method according to the first embodiment can save the energy consumption by more than 60% and improve the manufacturing efficiency by at least 50%. In the embodiments to be described below, due to the devices and technical solutions of induction heating and liquid spraying similar to those of the first embodiment, the following embodiments are able to not only obtain a material hardness distribution basically consistent with that of the first embodiment and a prolonged fatigue life, but also have the advantages of greatly reducing energy consumption and greatly improving manufacturing efficiency.

### < Second embodiment >

The method according to the second embodiment of the present invention comprises three steps. In the following description of the second embodiment, the definitions of relevant terms in the first embodiment will be adopted, but only the differences from the first embodiment will be described in detail.

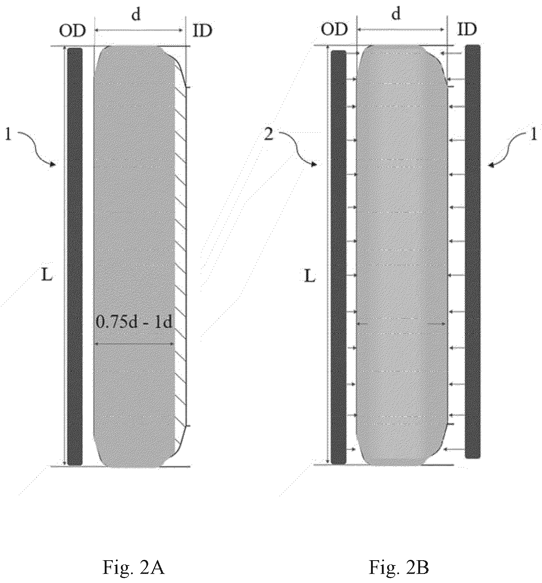

Figs. 2A and 2B show the first step and the second step of the method according to the second embodiment of the invention.

In the first step, as shown in Fig. 2A, the entire radially outer surface OD of the bearing ring is subjected to a full-cover induction heating and liquid spraying treatment 1, so that the first radially outer portion and the first radially middle portion of the bearing ring are hardened. In the first step, the entire radially outer surface OD of the bearing ring is subjected to an induction heating treatment, so that the temperature at the entire radially outer surface OD reaches 820°C-950°C, and then the entire radially outer surface OD is subjected to a liquid spraying treatment. However, unlike the first embodiment, the first step of the second embodiment only needs to ensure that the first radially outer portion and the first radially middle portion of the bearing ring are hardened.

In an example according to this embodiment, in the first step, a hardened layer having a depth of 0.75d - 1d from the radially outer surface OD is obtained, i.e., the sum of the thicknesses of the first radially outer portion and the first radially middle portion is 0.75d - 1d. According to an example of this embodiment, the frequency of the induction heating is not greater than 10 kHz. According to another example of this embodiment, the frequency of the induction heating is 1-3 kHz. Furthermore, according to an example of this embodiment, the liquid used for the liquid spraying treatment is water.

In the second step, as shown in Fig. 2B, the entire radially inner surface ID of the bearing ring is subjected to a full-cover induction heating and liquid spraying treatment 1, and meanwhile, the entire radially outer surface OD of the bearing ring is subjected to a full-cover liquid spraying treatment 2. That is, in a first stage of the second step, an induction heating treatment is performed at the radially inner surface ID, wherein the temperature of the entire radially inner surface ID reaches 820°C-950°C, and a liquid spraying treatment is performed at the radially outer surface OD, wherein the temperature of the entire radially outer surface OD is kept below 150°C. Then, in a second stage of the second step, the induction heating treatment at the radially inner surface ID is stopped, and a liquid spraying treatment is also started the radially inner surface ID, while the liquid spraying treatment at the radially outer surface OD is continued for a period of time. According to an example of this embodiment, the frequency of the induction heating treatment in the second step is 8-10 kHz, and the liquid used in the spraying treatment is water.

The second step of the second embodiment according to the present invention causes the following: the second radially inner portion of the bearing ring is subjected to an induction heating quenching in the second step, so as to be hardened; the second radially outer portion of the bearing ring is continuously sprayed with water after the first step, so that the surface temperature does not exceed 150°C, so its material properties basically do not change, thus maintaining the high hardness obtained in the first step; the second radially middle portion has been hardened in the first step, so it is subjected to a high-temperature tempering or a medium-temperature tempering during the induction heating treatment and the subsequent cooling process in the second step, resulting in its hardness to drop below that obtained after the first step, but its toughness being improved. According to an example of the second embodiment, through the second step, a hardening depth of about 0.2d-0.3d from the radially inner surface ID and radially outward is obtained, while the hardness at the radially outer surface OD is maintained.

In the third step of the second embodiment according to the present invention, the bearing ring is subjected to a low-temperature tempering treatment.

Therefore, according to the above description, by using basically the same principle of heat treatment as that of the first embodiment, the second embodiment enables obtaining approximately the same material hardness distribution as that in the first embodiment.

Here, the heat treatment method according to the first aspect of the present invention is further explained on the basis of the first embodiment and the second embodiment.

In the first step of the method, by performing an induction heating treatment and a liquid spraying treatment on the bearing ring, at least one side of the bearing ring in the thickness direction is hardened, and the middle portion in the thickness direction is also hardened. In this statement, "at least one side of the bearing ring is hardened" means that the radially outer portion and/or the radially inner portion of the bearing ring in the thickness direction is hardened. Therefore, the first embodiment corresponds to the case where both the radially outer portion and the radially inner portion are hardened, and the second embodiment corresponds to the case where only the radially outer portion is hardened. For the convenience of description, regions associated with the hardening are defined in the first step, which may be referred to as the "first radially outer portion", the "first radially inner portion" and the "first radially middle portion", wherein the "first radially outer portion" and the "first radially inner portion" may be collectively referred to as "first radially side portions".

It should be noted that, according to the first aspect of the invention, at least one hardened first radially side portion needs to be generated in the first step. If only one hardened first radially side portion is produced, as in the second embodiment, this hardened first radially side portion needs to be kept below 150°C in the second step of the method to maintain the hardened state, while the other first radially side portion opposite to it needs to be subjected to an induction heating and liquid spraying treatment in the second step to be hardened for the first time. In addition, the first radially middle portion needs to undergo a hardening in the first step and a medium-temperature tempering or a high-temperature tempering in the second step to reduce the hardness. On the other hand, if both the first radially outer portion and the first radially inner portion are hardened in the first step, as in the first embodiment, either of the two may be selected as the first radially side portion that is kept below 150°C in the second step to maintain its hardened state. For the other of the two, an induction heating is performed on its corresponding side surface so that it would undergo the hardening process again, while the first radially middle portion still need to undergo a hardening in the first step and a medium or high-temperature tempering to bring down its hardness.

Therefore, in the second step, it is necessary to select one first radially side portion that remains in a hardened state, and its corresponding side surface is called the first radial surface, on which only the liquid spraying treatment is performed to ensure that the temperature of the entire first radial surface does not exceed 150°C. On the other hand, the other first radially side portion opposite the first radially side portion selected to remain in the hardened state will undergo a hardening process in the second step, whether or not it has been hardened in the first step, with its corresponding side surface called the second radial surface, on which an induction heating and subsequent liquid spraying treatment is required to ensure that the both of the two first radially side portions are hardened after the second step. Under the above conditions, if it is guaranteed that the first radially middle portion is hardened in the first step, the effect of hardness reduction can be obtained under the processing conditions of the second step.

The bearing ring after the second step will have a regional distribution of "hardened-lower hardness-hardened" in the thickness direction, which can roughly correspond to the "first radially outer portion", "first radially middle portion" and "first radially inner portion" obtained in the first step. However, depending on the specific heat treatment parameters, the hardness partition obtained in the second step may not exactly coincide with the hardness partition obtained in the first step. Accordingly, the regions associated with the hardening defined in the second step may be referred to as the "second radially outer portion", the "second radially inner portion" and the "second radially middle portion".

### < Third embodiment >

The method according to the third embodiment of the present invention comprises three steps. In the following description of the third embodiment, the definitions of relevant terms in the previous embodiments will be adopted, but only the differences from the first embodiment will be described in detail.

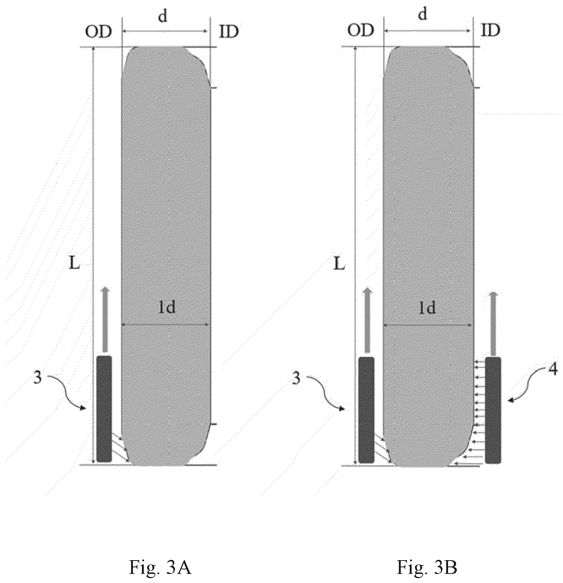

Figs. 3A and 3B show the first step and the second step of the method according to the third embodiment of the present invention.

In the first step, as shown in Fig. 3A, the radially outer surface OD of the bearing ring is subjected to a scanning induction heating and liquid spraying treatment 3, so that the material over the entire thickness d of the bearing ring is hardened. According to an example of this embodiment, a scanning induction heating device and a scanning liquid spraying device move together from one end of the bearing ring in the axial direction at an appropriate speed to the other end, the liquid spraying device performing liquid spraying quenching on the radially outer surface OD subjected to the induction heating. According to an example of this embodiment, the frequency of the induction heating is not greater than 10 kHz. According to another example of this embodiment, the frequency of the induction heating is 1-3 kHz. Furthermore, according to an example of this embodiment, the liquid used for the liquid spraying treatment is water.

In the second step, as shown in Fig. 3B, the radially outer surface OD of the bearing ring is subjected to a scanning induction heating and liquid spraying treatment 3. According to an example of this embodiment, the scanning type induction heating device and liquid spraying device move from one end to the other end of the bearing ring in the axial direction at an appropriate speed, so that a region of the radially outer surface OD subjected to the induction heating reaches a surface temperature of 820°C-950°C, and is subsequently subjected to the liquid spraying, so that the radially outer surface OD of the bearing ring is subjected to an induction heating quenching for a second time. At the same time, the radially inner surface ID of the bearing ring is subjected to a scanning liquid spraying treatment 4, wherein the region of the radially inner surface ID sprayed by the scanning liquid spraying treatment 4 will roughly and in real time correspond to or at least cover the region subjected to the above induction heating, so that the surface temperature of the region of the radially inner surface ID to which liquid is sprayed does not exceed 150°C, and therefore, the surface temperature of the entire radially inner surface ID does not exceed 150°C in the second step.

The second step of the third embodiment according to the present invention enables that, a section of the bearing ring subjected to induction heating treatment is actually subjected to basically the same heat treatment as the whole bearing ring in the first embodiment. That is, in the corresponding section, the second radially outer portion is subjected to an induction heating quenching and is hardened for a second time, the second radially inner portion keeps the high hardness obtained in the first step, and the second radially middle portion is subjected to a high-temperature tempering or a medium-temperature tempering to reduce its high hardness obtained in the first step, while obtaining an improved toughness.

In the third step of the third embodiment according to the present invention, the bearing ring is subjected to a low-temperature tempering treatment.

Therefore, according to the above description, by using basically the same principle of heat treatment as that of the above embodiments, the third embodiment enables obtaining approximately the same material hardness distribution as that in the above embodiments.

### < Fourth embodiment >

The method according to the fourth embodiment of the present invention comprises three steps. In the following description of the fourth embodiment, the definitions of relevant terms in the previous embodiments will be adopted, but only the differences from the third embodiment will be described in detail.

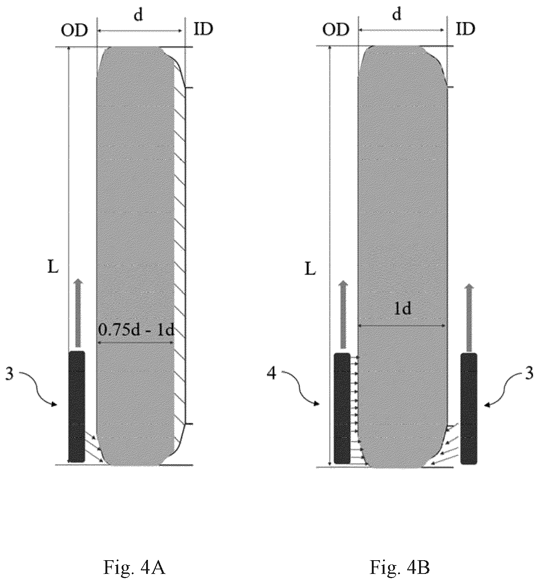

Figs. 4A and 4B show the first step and the second step of the method according to the fourth embodiment of the present invention.

In the first step, as shown in Fig. 4A, the radially outer surface OD of the bearing ring is subjected to a scanning induction heating and liquid spraying treatment 3 using a scanning induction heating device and a scanning liquid spraying device. However, different from the third embodiment, the first step of the fourth embodiment only needs to ensure that the first radially outer portion and the first radially middle portion of the bearing ring are hardened. According to an example of this embodiment, the frequency of the induction heating is not greater than 10 kHz. According to another example of this embodiment, the frequency of the induction heating is 1-3 kHz. Furthermore, according to an example of this embodiment, the liquid used for the liquid spraying treatment is water.

In the second step, as shown in Fig. 4B, the radially inner surface ID of the bearing ring is subjected to a scanning induction heating and liquid spraying treatment 3, wherein the scanning induction heating treatment causes a region of the radially inner surface ID subjected to the induction heating reaches a temperature of 820°C-950°C and is subsequently subjected to a liquid spraying, thus performing induction heating quenching on the radially inner surface ID of the bearing ring. At the same time, the radially outer surface OD of the bearing ring is subjected to a scanning liquid spraying process 4, and the region of the radially outer surface OD sprayed in the scanning liquid spraying process 4 will roughly and in real time correspond to or at least cover the region subjected to the above induction heating, so that the temperature of the entire surface of the radially outer surface OD does not exceed 150°C.

The second step of the fourth embodiment according to the present invention enables that, a section of the bearing ring subjected to the induction heating treatment is actually subjected to basically the same heat treatment as the whole bearing ring in the second embodiment. That is, the second radially outer portion maintains the high hardness obtained in the first step, the second radially inner portion is subjected to an induction heating quenching and is hardened, and the radially middle portion is subjected to a high-temperature tempering or a medium-temperature tempering to reduce its high hardness obtained in the first step, while obtaining an improved toughness.

In the third step of the fourth embodiment according to the present invention, the bearing ring is subjected to a low-temperature tempering treatment.

Therefore, according to the above description, by using basically the same principle as that of the above embodiments, the fourth embodiment enables obtaining approximately the same material hardness distribution as that in the above embodiments.

In the second step of the aforementioned third and fourth embodiments, the induction heating and liquid spraying treatment for one of the radially outer surface OD and the radially inner surface ID and the liquid spraying treatment for the other of the radially outer surface OD and the radially inner surface ID are of the scanning type. However, the scanning liquid spraying treatment 4 performed on the other surface in the above cases can also be changed to a full-cover liquid spraying treatment 2, thereby forming the fifth and sixth embodiments described below.

### < Fifth embodiment >

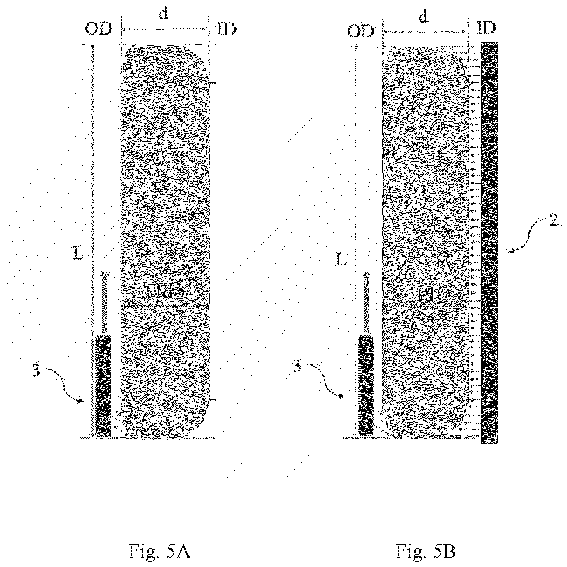

The method according to the fifth embodiment has three steps. Figs. 5A and 5B show the first step and the second step of the method according to the fifth embodiment of the present invention.

First of all, the first step of the fifth embodiment is the same as that of the third embodiment.

Then, in the second step, as shown in Fig. 5B, the radially outer surface OD of the bearing ring is subjected to a scanning induction heating and liquid spraying treatment 3, so that a region of the radially outer surface OD that is subjected to the induction heating reaches a surface temperature of 820°C-950°C, and is subsequently subjected to liquid spraying, so that the radially outer surface OD of the bearing ring is subjected to an induction heating quenching for a second time. In addition, the radially inner surface ID of the bearing ring is subjected to a full-cover liquid spraying treatment 4, so that the surface temperature of the entire radially inner surface ID does not exceed 150°C in the second step.

Therefore, the second step of the fifth embodiment according to the present invention enables that, the heat treatment to which the bearing ring is subjected over time is substantially the same as that in the second step of the third embodiment. That is, in the corresponding section, the second radially outer portion is subjected to an induction heating quenching and is hardened for a second time, the second radially inner portion keeps the high hardness obtained in the first step, and the second radially middle portion is subjected to a high-temperature tempering or a medium-temperature tempering to reduce its high hardness obtained in the first step, while obtaining an improved toughness.

In the third step of the fifth embodiment according to the present invention, the bearing ring is subjected to a low-temperature tempering treatment.

Therefore, according to the above description, by using basically the same principle of heat treatment as that of the above embodiments, the fifth embodiment enables obtaining approximately the same material hardness distribution as that in the above embodiments.

Here, on the basis of the first embodiment, the third embodiment and the fifth embodiment, the heat treatment method according to the first aspect of the present invention is further explained.

In the second step of the method, the induction heating treatment can be simultaneously applied on the entirety of the surface that needs to be induction heated, which is the full-cover induction heating treatment, or the induction heating treatment can be applied on only a part of this surface at a time and then moved to the other regions of this surface, an example of which is the scanning induction heating treatment, where the induction heating moves from one end to the other end of the bearing ring. However, regardless of the specific form of the induction heating treatment, it is necessary to ensure that the temperature of the entire surface of a radially side surface of the bearing ring opposite the radially side surface subjected to the induction heating treatment does not exceed 150°C. Therefore, for the full-cover induction heating treatment, as in the first embodiment, it is necessary to spray the liquid on substantially the entire surface of said opposite radially side surface to reduce the temperature of this entire surface. For the scanning induction heating treatment, the scanning liquid spraying treatment can be performed on said opposite radially side surface corresponding to the region of the scanning induction heating in real time, thereby taking away sufficient heat in the radially side portion corresponding to said opposite radially side surface, so that the temperature of the entire said opposite radially side surface does not exceed 150°C, which is the third embodiment. However, for the scanning induction heating treatment, it is also possible to spray the liquid on substantially the entire surface of said opposite radially side surface, so that the temperature of this entire surface can also be made not to exceed 150°C, which is the fifth embodiment.

Therefore, the first embodiment, the third embodiment and the fifth embodiment illustrate with examples that, the induction heating treatment in the second step may be performed in at least a part of the second radial surface, and the liquid spraying treatment in the second step may be performed in at least a part of the first radial surface, as long as the entire surface of the first radial surface does not exceed 150°C under the treatment of liquid spraying.

### < Sixth embodiment >

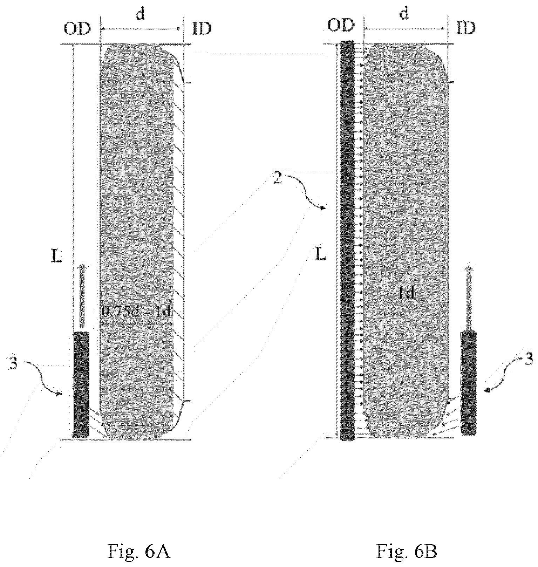

The method according to the sixth embodiment has three steps. Figs. 6A and 6B show the first step and the second step of the method according to the sixth embodiment of the present invention.

First of all, the first step of the sixth embodiment is the same as that of the fourth embodiment.

Then, in the second step, as shown in Fig. 6B, the radially inner surface ID of the bearing ring is subjected to a scanning induction heating and liquid spraying treatment 3, so that a region of the radially inner surface ID that is subjected to the induction heating reaches a surface temperature of 820°C-950°C, and is then subjected to a liquid spraying, so that the radially inner surface ID of the bearing ring is subjected to an induction heating quenching. In addition, the radially outer surface OD of the bearing ring is subjected to a full-cover liquid spraying treatment 4, so that the surface temperature of the entire radially outer surface OD does not exceed 150°C in the second step.

Therefore, the second step of the sixth embodiment according to the present invention enables that, the heat treatment to which the bearing ring is subjected over time is substantially the same as that in the second step of the fourth embodiment. That is, in the corresponding section, the second radially inner portion is subjected to an induction heating quenching and is hardened, the second radially outer portion keeps the high hardness obtained in the first step, and the second radially middle portion is subjected to a high-temperature tempering or a medium-temperature tempering to reduce its high hardness obtained in the first step, while obtaining an improved toughness.

In the third step of the sixth embodiment according to the present invention, the bearing ring is subjected to a low-temperature tempering treatment.

Therefore, according to the above description, by using basically the same principle of heat treatment as that of the above embodiments, the sixth embodiment enables obtaining approximately the same material hardness distribution as that in the above embodiments.

### < Seventh embodiment>

The method according to the seventh embodiment of the present invention comprises three steps. In the following description of the seventh embodiment, the definitions of relevant terms in the previous embodiments will be adopted, but only the differences from the first embodiment will be described in detail.

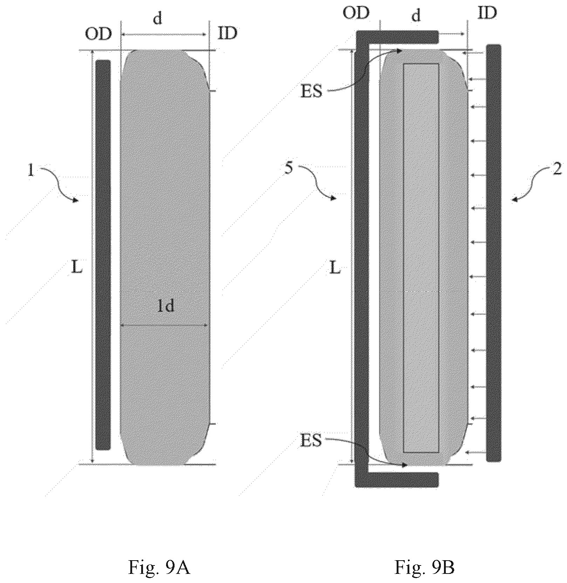

Figs. 9A and 9B show the first step and the second step of the method according to the seventh embodiment of the present invention. The first step of the seventh embodiment according to the present invention is the same as that of the first embodiment. As shown in Fig. 9A, an induction heating and liquid spraying treatment is performed on the entire radially outer surface OD of the bearing ring, that is, a full-cover induction heating and liquid spraying treatment 1, so that the material over the entire thickness d of the bearing ring is hardened.

The second step of the seventh embodiment according to the present invention is basically the same as the second step of the first embodiment, except that in the seventh embodiment, the surfaces of the axial ends of the bearing ring ES are also subjected to an induction heating and liquid spraying treatment 1, that is, a full-cover induction heating and liquid spraying treatment covering the axial ends and the entire radially outer surface of the bearing ring OD 5. At the same time, the entire radially inner surface ID of the bearing ring is subjected to a liquid spraying treatment 2.

Therefore, through the second step of the seventh embodiment, hardened axial end portions of the bearing ring are obtained in addition to a hardened second radially outer portion, a hardened second radially inner portion, and a second radially middle portion with reduced hardness but improved toughness. In an example according to the seventh embodiment, a hardening depth of about 1 mm is obtained at the axial end surfaces ES of the bearing ring.

In the third step of the seventh embodiment according to the present invention, the bearing ring is subjected to a low-temperature tempering treatment.

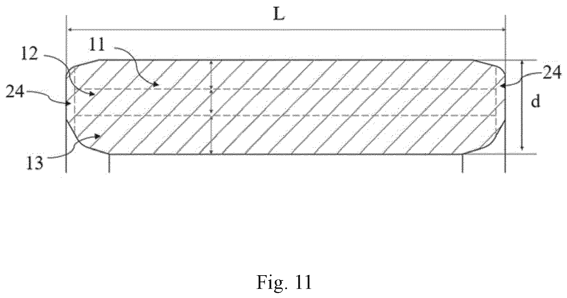

FIG. 11 shows a schematic diagram of the material hardness of the bearing ring obtained by the method according to the seventh embodiment of the present invention, wherein a cross-sectional view of the bearing ring in a plane where the axis thereof is located is used for illustration. After the method according to the seventh embodiment of the present invention, in the part of the bearing ring other than the two ends, a second radially outer portion 11 having a hardness of 55 - 65HRC and a thickness of 0.1d - 0.4d, a second radially inner portion 13 having a hardness of 55 - 65 HRC and a thickness of 0.1d - 0.4d, and a second radially middle portion 12 having a hardness of 25 - 55 HRC and between the second radially outer portion 11 and the second radially inner portion 13 will be formed. Therefore, the second radially outer portion 11 and the second radially inner portion 13 are hardened regions, and the second radially middle portion 12 is a toughened region. In addition, at both ends of the bearing ring, axial end portions 24 with a hardness of about 50 HRC and an axial depth of about 1 mm are formed, so that the axial end portions 24 are also formed as hardened regions.

In an embodiment according to the present invention, by adjusting the specific parameters of the induction heating and the liquid spraying, a second radially outer portion 11 with a thickness of 0.3d-0.4d and a second radially inner portion with a thickness of 0.2d-0.3d can be obtained. In another embodiment according to the present invention, by adjusting the specific parameters of the induction heating and the liquid spraying, a second radially outer portion 11 with a hardness of 58-65 HRC, a second radially inner portion 13 with a hardness of 58-65 HRC, and a second radially middle portion 12 with a hardness of 35-55 HRC can be obtained. In addition, at both ends of the bearing ring, axial end portions 24 with a hardness of about 50 HRC and an axial depth of about 1 mm are formed, so that the axial end portions 24 are also formed as hardened regions.

### < Eighth embodiment >

The method of the eighth embodiment according to the present invention comprises three steps. In the following description of the eighth embodiment, the definitions of relevant terms in the previous embodiments will be adopted, but only the differences from the second embodiment will be described in detail.

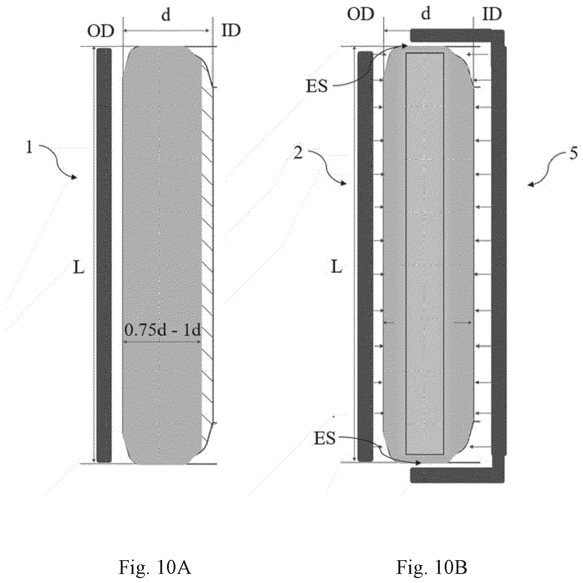

Figs. 10A and 10B show the first step and the second step of the method according to the eighth embodiment of the present invention. The first step of the eighth embodiment according to the present invention is the same as that of the second embodiment. As shown in Fig. 10A, the entire radially outer surface OD of the bearing ring is subjected to an induction heating and liquid spraying treatment, i.e., a full-cover induction heating and liquid spraying treatment 1, so that the first radially outer portion and the first radially middle portion of the bearing ring are hardened.

The second step of the eighth embodiment according to the present invention is basically the same as the second step of the second embodiment, except that in the eighth embodiment, the surfaces of the axial ends of the bearing ring ES are also subjected to an induction heating and liquid spraying treatment, that is, a full-cover induction heating and liquid spraying treatment covering the axial ends and the entire radially inner surface of the bearing ring ID 5. At the same time, the entire radially outer surface OD of the bearing ring is subjected to a liquid spraying treatment 2.

Therefore, through the second step of the eighth embodiment, hardened axial end portions of the bearing ring are obtained in addition to a hardened second radially outer portion, a hardened second radially inner portion, and a second radially middle portion with reduced hardness but improved toughness. In an example according to the eighth embodiment, a hardening depth of about 1 mm is obtained at the axial end surfaces ES of the bearing ring.

In the third step of the eighth embodiment according to the present invention, the bearing ring is subjected to a low-temperature tempering treatment.

Therefore, according to the above description, by using basically the same principle as that of the above embodiments, the eighth embodiment enables obtaining approximately the same material hardness distribution as that in the seventh embodiment.

### < Ninth embodiment >

In the foregoing embodiments and their respective examples, the method for heat treatment of a bearing ring comprises three steps, and the third step is low-temperature tempering treatment. On the other hand, according to the ninth embodiment of the present invention, the method for heat treatment of a bearing ring may only comprise the first step and the second step of the first embodiment, but does not comprise the third step of the first embodiment, which the final low-temperature tempering treatment. The ninth embodiment according to the present invention also enables generating a hardened second radially outer portion, a hardened second radially inner portion, and a second radially middle portion with reduced hardness but improved toughness. The ninth embodiment according to the present invention further causes an increased residual compressive stress in the surface layer of the bearing ring. Therefore, in addition to shortening the process route and saving energy consumption, the ninth embodiment can further improve the fatigue strength of the bearing ring.

Accordingly, according to other embodiments of the present invention, the method for heat treatment of a bearing ring may only comprise the first step and the second step of any one of the second to eighth embodiments, but does not comprise the third step of said embodiment, thus also having the advantages of the ninth embodiment described above.

### < Tenth embodiment >

According to the tenth embodiment of the present invention, the method for heat treatment of a bearing ring can be basically the same as the process described in the first embodiment, and the tenth embodiment differs from the first embodiment only in that in each step, the heat treatments performed at the radially outer surface OD and the radially inner surface ID are exchanged. That is, according to the tenth embodiment, in the first step, the entire radially inner surface ID of the bearing ring is subjected to the full-cover induction heating and liquid spraying treatment 1, so that the material over the entire thickness d of the bearing ring is hardened; in the second step, the entire radially inner surface ID of the bearing ring is subjected to the full-cover induction heating and liquid spraying treatment 1, and meanwhile the entire radially outer surface OD of the bearing ring is subjected to the full-cover liquid spraying treatment 2, wherein in the first stage of the second step, an induction heating treatment is performed at the radially inner surface ID, the temperature at the entire radially inner surface ID reaching 820°C-950°C, and at the same time, a liquid spraying treatment is performed at the radially outer surface OD, the temperature of the entire radially outer surface OD being kept below 150°C; in the third step, the bearing ring is subjected to a low-temperature tempering treatment.

According to the foregoing description, by using basically the same principle as that of the first embodiment, the tenth embodiment enables obtaining approximately the same material hardness distribution as that in the first embodiment.

Accordingly, according to other embodiments of the present invention, the method for heat treatment of a bearing ring may be a method obtained by exchanging the respective treatments corresponding to the radially inner surface and the radially outer surface relative to any one of the second to ninth embodiments and their related embodiments, thus also having the technical advantages of the corresponding embodiments.

Exemplary implementations of the method for heat treatment proposed by the present invention are described in detail above with reference to the preferred embodiments. However, those skilled in the art can understand that, without departing from the concept of the present invention, various changes and modifications on the above-mentioned specific embodiments can be made, and various technical features and structures proposed in the present invention can be combined in various ways without exceeding the protection scope of the present invention.

## Claims

1. A method for heat treatment of a bearing ring, the method comprising the following steps:
the first step: performing an induction heating treatment and a liquid spraying treatment on the bearing ring, so that a first radially outer portion and/or a first radially inner portion of the bearing ring are hardened, and a first radially middle portion located between the first radially outer portion and the first radially inner portion is hardened;
the second step: a side surface, to which one of the two portions or the one portion of the first radially outer portion and the first radially inner portion that is hardened in the first step is adjacent, being defined as a first radial surface, and a side surface of the bearing ring opposite to the first radial surface being defined as a second radial surface, performing an induction heating treatment on at least a part of the second radial surface, the temperature of the region of the second radial surface subjected to the induction heating treatment reaching 820-950°C, and at the same time, performing a liquid spraying treatment in at least a part of the first radial surface so that the temperature of the whole surface of the first radial surface does not exceed 150°C, and performing a liquid spraying treatment on the region of the second radial surface subjected to the induction heating treatment after the induction heating treatment, so that the bearing ring forms a hardened second radially outer portion (11), a hardened second radially inner portion (13), and a second radially middle portion (12) located between the second radially outer portion and the second radially inner portion and having a hardness lower than the second radially outer portion and the second radially inner portion;
the third step: performing a low-temperature tempering treatment on the bearing ring.

2. The method for heat treatment of a bearing ring according to claim 1, wherein the induction heating treatment in the first step is a full-cover induction heating treatment or a scanning induction heating treatment, and the induction heating treatment in the second step is a full-cover induction heating treatment or a scanning induction heating treatment.

3. The method for heat treatment of a bearing ring according to claim 2, wherein the induction heating treatment in the second step is a full-cover induction heating treatment, and in the second step, the induction heating treatment is also performed on both ends of the bearing ring, followed by a liquid spraying treatment on the both ends of the bearing ring.

4. The method for heat treatment of a bearing ring according to claim 2, wherein in the second step, the second radial surface is subjected to a full-cover induction heating treatment and a subsequent full-cover liquid spraying treatment, and the first radial surface is subjected to a full-cover liquid spraying treatment, or in the second step, the second radial surface is subjected to a scanning induction heating treatment and a subsequent scanning liquid spraying treatment, and the first radial surface is subjected to a scanning liquid spraying treatment or a full-cover liquid spraying treatment.

5. The method for heat treatment of a bearing ring according any one of claims 1-4, wherein the temperature for the low-temperature tempering treatment of the third step is 150°C-250°C, and/or for the low-temperature tempering of the third step, a tempering furnace is used to keep the bearing ring warm for at least 2 hours, or induction tempering is used to keep the bearing ring warm for 1-20 minutes.

6. The method for heat treatment of a bearing ring according to claim 1, wherein for the liquid spraying treatment in the first step and the second step, water or a water-based quenching medium is used as the sprayed liquid, and/or in the second step, the liquid spraying treatment on the first radial surface is finished before the liquid spraying treatment on the second radial surface.

7. The method for heat treatment of a bearing ring according any one of claims 1-4, wherein the material of the bearing ring is selected from medium or high carbon steel, and is preferably selected from GCr15, 100Cr6, 52100, 100C6, SUJ2, 42CrMo, 50CrMo, 55MnB, 70Mn, T8, T10, Cr2, T8Mn, 85, 60Mn, 65Mm, 50B, 45MnB, 50Cr, GCr9, GCr9SiMn, GCr15SiMn, 9Cr18, 9Cr18Mo.

8. A method for heat treatment of a bearing ring, the method comprising the following steps:
the first step: performing an induction heating treatment and a liquid spraying treatment on the bearing ring, so that a first radially outer portion and/or a first radially inner portion of the bearing ring are hardened, and a first radially middle portion located between the first radially outer portion and the first radially inner portion is hardened;
the second step: a side surface, to which one of the two portions or the one portion of the first radially outer portion and the first radially inner portion that is hardened in the first step is adjacent, being defined as a first radial surface, and a side surface of the bearing ring opposite to the first radial surface being defined as a second radial surface, performing an induction heating treatment on at least a part of the second radial surface, the temperature of the region of the second radial surface subjected to the induction heating treatment reaching 820-950°C, and at the same time, performing a liquid spraying treatment in at least a part of the first radial surface so that the temperature of the whole surface of the first radial surface does not exceed 150°C, and performing a liquid spraying treatment on the region of the second radial surface subjected to the induction heating treatment after the induction heating treatment, so that the bearing ring forms a hardened second radially outer portion (11), a hardened second radially inner portion (13), and a second radially middle portion (12) located between the second radially outer portion and the second radially inner portion and having a hardness lower than the second radially outer portion and the second radially inner portion.

9. A bearing ring defined from outside to inside in the radial direction with: a radially outer portion (11) with a thickness of 10%-40% of the thickness of the bearing ring (d), a radially middle portion (12) with a thickness of 20%-80% of the thickness of the bearing ring (d), and a radially inner portion (13) with a thickness of 10%-40% of the thickness of the bearing ring (d), wherein the hardness of the radially outer portion (11) is 55-65 HRC, the hardness of the radially middle portion (12) is 25-55 HRC, and the hardness of the radially inner portion (13) is 55-65 HRC.

10. The bearing ring according to claim 9, wherein the hardness of the radially outer portion (11) is 58-65 HRC, the hardness of the radially middle portion (12) is 35-55 HRC, and the hardness of the radially inner portion (13) is 58-65 HRC, and/or the hardness of axial end portions (24) at two ends of the bearing ring is greater than 50 HRC.
